# EUROPÄISCHE PATENTSCHRIFT

(11) **EP 4 477 051 B1**
(45) Veröffentlichungstag und Bekanntmachung des Hinweises auf die Patenterteilung: **23.09.2026**
(21) Anmeldenummer: 24176486.9
(22) Anmeldetag: 17.05.2024
(51) Int. Cl.: A01F 15/07, A01F 15/08

(54) **RUNDBALLENPRESSE UND VERFAHREN**
ROUND BALER AND METHOD
PRESSE À BALLES RONDES ET PROCÉDÉ

(30) Priorität: 05.06.2023 DE 102023114691
(43) Veröffentlichungstag der Anmeldung: 18.12.2024
(73) Patentinhaber: Deere & Company, Moline, IL 61265 (US)
(72) Erfinder: Chabassier, Aurelien, Mannheim (DE)
(74) Vertreter: Stein, Stefan

(56) Entgegenhaltungen:
- EP-A2- 1 396 187
- EP-B1- 3 315 016
- WO-A1-2022/024102
- DE-T2- 3 852 830
- US-B1- 8 516 957
- US-B2- 10 588 264
- US-B2- 7 222 566

## Beschreibung

Die Erfindung betrifft eine Rundballenpresse zur Bildung eines zumindest im Wesentlichen zylindrischen Ballens, mit einem Rahmen, der sich über ein Fahrwerk auf dem Untergrund abstützt, und einem Gehäuse mit einem, einen Pressraum mit variablem Durchmesser bestimmenden Pressmittel, wenigstens einer ersten Sensoreinrichtung zur Ermittlung des Gewichts des Ballens und einer Steuereinheit, mittels der zumindest der Durchmessers eines fertiggestellten Ballens vorgegeben werden kann, und ein Verfahren zum Betrieb einer Rundballenpresse.

Rundballenpressen werden dazu verwendet, Pressgut aufzunehmen und dieses zu zylindrischen Ballen zu formen. Derartige Rundballenpressen werden häufig in der Landwirtschaft zur Bergung von Stroh oder Heu eingesetzt, das in Schwaden auf dem Boden abgelegt ist. Die US 7,222,566 B2 offenbart eine Rundballenpresse mit einem Sensor, der eingerichtet ist, eine Information hinsichtlich des Durchmessers eines in der Ballenbildungskammer gebildeten Ballens zu erzeugen.

Rundballenpressen mit variablem Pressraum können Ballen mit unterschiedlichem Durchmesser herstellen. Dieser Durchmesser wird üblicherweise vor der Bildung des Ballens vorgegeben. Abhängig von den Umgebungsbedingungen, beispielsweise der Feuchte und/oder der Zusammensetzung des Ernteguts, können Ballen, obwohl ihr Durchmesser gleich ist, ein unterschiedliches Gewicht aufweisen. Dies ist im Verkauf oft nachteilig, da Ballen mit gleichem Gewicht bei einheitlichem Durchmesser gewünscht bzw. von Kunden bestellt werden.

Die der Erfindung zugrunde liegende Aufgabe wird daher darin gesehen eine Rundballenpresse und ein Verfahren vorzusehen, durch die die vorgenannten Nachteile überwunden werden.

Die Aufgabe wird erfindungsgemäß durch die Lehre der Patentansprüche 1 und 6 gelöst. Weitere vorteilhafte Ausgestaltungen und Weiterbildungen der Erfindung gehen aus den Unteransprüchen hervor.

Diesbezüglich weist eine Rundballenpresse zur Bildung eines zumindest im Wesentlichen zylindrischen Ballens einen Rahmen, der sich über ein Fahrwerk auf dem Untergrund abstützt, und ein Gehäuse mit einem, einen Pressraum mit variablem Durchmesser bestimmenden Pressmittel auf. Darüber hinaus ist wenigstens eine erste Sensoreinrichtung zur Ermittlung des Gewichts des Ballens und eine Steuereinheit vorgesehen, mittels der zumindest der Durchmesser eines fertiggestellten Ballens vorgegeben werden kann. Mittels der Steuereinheit kann zusätzlich zu dem Durchmesser das Gewichts eines fertiggestellten Ballens vorgegeben werden, so dass mit der Rundballenpresse Ballen sowohl einheitlichen Durchmessers als auch mit einheitlichem Gewicht gebildet werden können. Derartige Rundballenpressen werden üblicherweise in der Landwirtschaft zur Bildung von rundzylindrischen Ballen aus Erntegut, beispielsweise aus Stroh, Heu oder Silage eingesetzt, welches mittels einer Erntegutaufnahmeeinrichtung vom Untergrund aufgenommen und dem Pressraum zugeführt wird. Es ist denkbar, eine Rundballenpresse selbstfahrend auszubilden, meist werden Rundballenpressen aber an ein Zugfahrzeug angehängt und von diesem gezogen. Bei einem Zugfahrzeug kann es sich beispielsweise um einen Traktor handeln. Es ist eine weitere Sensoreinrichtung (74) zur Ermittlung des aktuellen Durchmesser des in dem Pressraum befindlichen Ballens vorgesehen, wobei die weitere Sensoreinrichtung (74) konfiguriert ist, den aktuellen Durchmesser des Ballens zu ermitteln und einen den Durchmesser repräsentierenden Ausgabewert an die Steuereinheit zu übermitteln. Die erste Sensoreinrichtung (70) ist konfiguriert, das Gewicht des Gehäuses (12) mit einem in ihr befindlichen Ballen (B) zu ermitteln und einen Ausgabewert an die Steuereinheit (ECU) zu übermitteln. Die Steuereinheit (ECU) ist konfiguriert, zumindest einen Maschinenparameter und/oder einen Ballenparameter in Abhängigkeit von den Ausgabewerten der Sensoreinrichtungen (70, 74) zu steuern bzw. zu regeln.

Bei dem Maschinenparameter kann es sich vorzugsweise um einen von dem Pressmittel auf den zu bildenden Ballen ausgeübten Pressdruck handeln.

Es kann aber alternativ oder zusätzlich vorgesehen sein, dass es sich bei dem Ballenparameter vorzugsweise um die Ballendichte handelt.

Ein besonders einfacher Aufbau ergibt sich, wenn die erste Sensoreinrichtung an dem Fahrwerk vorgesehen ist. Das Fahrwerk kann beispielsweise eine oder auch mehrere Achsen aufweisen, an denen Räder, aber auch Kufen oder Raupen oder andere geeignete Mittel, vorzugsweise drehbar, aufgenommen werden.

Die erste Sensoreinrichtung kann in der Art eines Dehnungsmessstreifens ausgebildet sein und/oder wenigstens einen Dehnungsmessstreifen aufweisen. Beispielsweise kann der Dehnungsmessstreifen an dem Fahrwerk bzw. einer Achse der Rundballenpresse vorgesehen sein oder mit diesem/dieser zusammenwirken. Der/Die Dehnungsmessstreifen kann/können auch Teil einer Wägezelle sein.

Bei der weiteren Sensoreinheit kann es sich beispielsweise um einen oder mehrere Ultraschallsensoren handeln bzw. die Sensoreinheit kann derartige Sensoren aufweisen. Es sind aber auch alternative Ausführungen denkbar.

Gemäß einem Verfahren zum Betrieb einer zuvor beschriebenen Rundballenpresse wird mittels der Steuereinheit ein Durchmesser sowie ein Gewicht eines fertiggestellten Ballens vorgewählt. Während der Ballenbildung werden durch die Sensoreinrichtungen das aktuelle Gewicht sowie der Durchmesser des Ballens ermittelt, wobei die Steuereinheit zumindest einen Maschinenparameter und/oder einen Ballenparameter in Abhängigkeit von der Ausgabe der Sensoreinrichtungen steuert bzw. regelt. Dies kann einmalig oder mehrfach erfolgen, beispielsweise in regelmäßigen Zeitabständen und/oder beispielsweise automatisch, wenn die Steuereinheit aufnimmt, dass die Ausgabewerte des/der Sensoreinheiten von vorbestimmten/-gegebenen Werten abweichen.

Beispielsweise kann durch eine Erhöhung des Pressdrucks die Dichte des Ballens und damit das Gewicht des Ballens erhöht werden. Wird der Pressdruck verringert, so kann sich die Dichte des Ballens verringern und damit das Gewicht des Ballens reduziert werden.

Besonders günstig ist es, wenn in der Steuereinheit eine Referenzierung von aktuell ermitteltem Durchmesser und Gewicht des Ballens mit dem vorgewählten Durchmesser und Gewicht des fertiggestellten Ballens erfolgt. Hierfür kann in der Steuereinheit vorzugsweise wenigstens ein Referenzdatensatz hinterlegt sein. Der Referenzdatensatz kann entsprechende Werte für ein Verhältnis von Durchmesser zu Gewicht des sich in Bildung befindlichen Ballens zu dem vorgewählten Gewicht und Durchmesser des Ballens beinhalten. Es kann vorgesehen sein, dass ein Referenzdatensatz Referenzwerte für unterschiedliche Erntegüter und/oder Erntebedingungen enthält. Es ist aber auch denkbar, unterschiedliche Referenzdatensätze vorzusehen. Die Bildung des Ballens kann entsprechend gesteuert/geregelt werden. Die Bildung des Ballens bzw. die Maschinen-/Ballenparameter können entsprechend der Vorgaben des/der Refernzdatensätze geregelt bzw. gesteuert werden Beispielsweise kann die Ballendichte bzw. der Pressdruck reduziert werden, wenn ein zu hohes Gewicht ermittelt wird bzw. erhöht werden, wenn das Gewicht des Ballens im Verhältnis zu dem vorliegenden Durchmesser zu niedrig ist.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

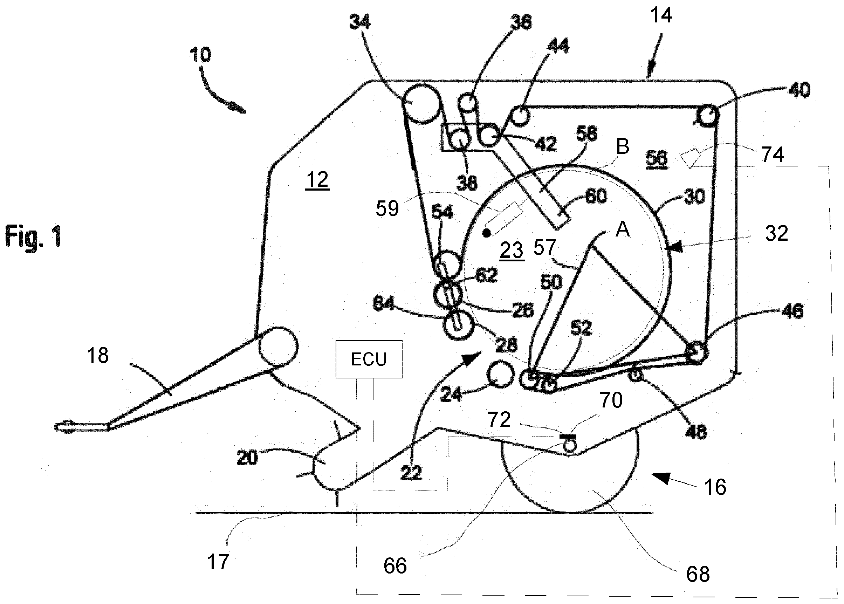

- Fig. 1: zeigt eine Seitenansicht einer Rundballenpresse mit mehreren in einem Gehäuse angeordneten Walzen, einem diese umschlingenden Pressmittel und einer Steuereinheit.

In Figur 1 ist eine Ausführungsform einer Rundballenpresse 10 zur Bildung eines Ballens B dargestellt, die ein Gehäuse 12 und einen Rahmen 14 aufweist, der sich über ein Fahrwerk 16 auf dem Untergrund 17 abstützt. An der Vorderseite des Rahmens 14 ist eine Deichsel 18 angeordnet, um die Rundballenpresse 10 an ein nicht gezeigtes Zugfahrzeug, beispielsweise einen Traktor, anhängen und über ein Feld ziehen zu können. Darüber hinaus ist eine nur andeutungsweise gezeigte Einrichtung zur Steuerung und/oder Regelung der Rundballenpresse bzw. zur Überwachung eines Ballenbildungsprozesses vorgesehen, die in der weiteren Beschreibung als Steuereinheit ECU bezeichnet werden wird. Mittels dieser Steuereinheit ECU, auf die im Folgenden noch genauer eingegangen werden wird, können beispielsweise Parameter/Funktionen der Rundballenpresse 10 und/oder des Ballens B bzw. der Ballenbildung vorgewählt werden.

Eine Aufnahmevorrichtung 20 in Form einer Pick-Up dient zur Aufnahme von auf dem Boden liegenden Erntegut, z. B. von in einem Schwad abgelegten Heu oder Stroh. Das von der Aufnahmevorrichtung 20 aufgenommene Erntegut wird dem Einlass 22 einem Pressraum 23 zugeführt und dort spiralförmig zu einem rundzylindrischen, nur andeutungsweise gezeigten Ballen B aufgerollt, gebunden und anschließend auf den Boden abgelegt. Am Einlass 22 des Pressraums 23 sind eine untere, stationäre Rolle 24 und zwei obere Rollen 26, 28 positioniert. Der Pressraum 23 wird weiterhin durch ein endloses Pressmittel 30 in Form zweier seitlich unmittelbar nebeneinander anliegender Pressriemen 32 gebildet, die um eine Anzahl von Walzen 34 - 54 geführt werden. Es ist aber auch denkbar, dass Pressmittel 30 einteilig auszubilden oder alternativ auch mehr als zwei Pressriemen 32 vorzusehen. Während der Pressraum 23 umfangsseitig im Wesentlichen von dem Pressmittel 30 und den Rollen 24 bis 28 umgeben wird, wird sie seitlich von Seitenwänden 56 begrenzt.

Vier der Walzen 46 bis 52 sind am unteren Ende eines deltaförmigen Trägers 57 frei drehbar gelagert, der um seine obere Spitze um eine horizontal und quer zur Vorwärtsrichtung verlaufende Drehachse A schwenkbar angelenkt ist und mit einem Aktor (nicht gezeigt) aus der in Fig. 1 dargestellten Ballenbildungsposition in eine nach hinten und oben verschwenkte Ballenauswurfposition verbringbar ist.

Zur Straffung des Pressmittels 30 ist ein Spannarm 58 mit zwei an dem Spannarm 58 radial außen beweglich angeordnete Walzen 38, 42 und ein Spannelement 59 vorgesehen. Der Spannarm 58 ist im Bereich der Seitenwände 38 oberhalb und vor der Drehachse A um eine horizontal und quer zur Vorwärtsrichtung verlaufende Achse schwenkbar in einem Lager 60 gelagert und erstreckt sich bis unter die Ebene, in welcher die ortsfesten oberen Walzen 34, 36, 44 angeordnet sind. Das Spannelement 59 ist in üblicher Weise als ein Hydraulikmotor ausgebildet.

Die oberen Rollen 26, 28 und die Walze 54 sind an einem schwenkbaren Schwenkrahmen 64 befestigt, der in seinem Mittenbereich um eine sich horizontal und quer zur Vorwärtsrichtung erstreckende Welle 62 gelagert ist. Die Walze 54 und die Rollen 26, 28 sind frei drehbar in dem Schwenkrahmen 64 gelagert, wobei die Rolle 26 koaxial zu der Welle 62 verläuft. Der Schwenkrahmen 64 kann mittels eines nicht gezeigten Spannelements in eine bestimmte Stellung vorgespannt werden.

Das Pressmittel 30 wird mittels des Spannarms 58 stets so fest an die drehend angetriebene, ortsfeste Walze 34 angelegt, dass seine Mitnahme gewährleistet ist. Auch die Walze 54 wird drehend angetrieben.

Das Pressmittel 30 nimmt einen Anfangszustand ein, in dem es gerade gestreckt den Einlass 22 überbrückt, und einen Endzustand, in dem es sich wie eine große Schlaufe um den Ballen 36 schlingt, etwa wie in der Figur 1 gezeigt. Der Pressraum 23 ist somit in seiner Größe veränderlich, d. h. sein Durchmesser nimmt mit der Größe des Ballens zu. Der Ballen befindet sich während seiner Bildung in dem Pressraum 23 und wird von dem Pressmittel 30 größtenteils umschlungen, fällt aber aus dem Pressraum 23 nach hinten auf den Boden, sobald der Träger 57 mit den beweglichen Walzen 46 bis 52 mit Blick auf die Zeichnung entgegen dem Uhrzeigerdrehsinn nach oben schwenkt.

Es wird nun erneut auf das Rahmen 14 der Rundballenpresse 10 und das Fahrwerk 16 Bezug genommen. Gemäß dem vorliegenden Ausführungsbeispiel weist das Fahrwerk 16 eine Achse 66 auf, welche an dem Rahmen 14 aufgenommen wird. An der Achse 66 sind drehbar Räder 68 aufgenommen, welche in Kontakt mit dem Untergrund 17 stehen. An der Achse 66 ist darüber hinaus eine Sensoreinrichtung 70 vorgesehen..

Die Sensoreinrichtung 70 ist vorgesehen, um das aktuelle Gewicht eines in dem Pressraum 23 angeordneten, sich in Bildung befindlichen bzw. gebildeten Ballens B zu ermitteln. Hierzu weist die Sensoreinrichtung 70 vorzugsweise wenigstens eine Wägeeinrichtung 72, insbesondere in der Art einer Wägezelle und/oder eines oder mehrerer Dehnungsmessstreifen auf. Der/die Dehnungsmessstreifen können auch Teil der Wägezelle sein. Die Sensoreinrichtung 70 und/oder die Wägeeinrichtung 72 ist mit der Steuer- bzw. Regeleinrichtung ECU der Rundballenpresse 10 verbunden, um an diese Ausgabewerte zur Auswertung zu übermitteln.

Da sich der gesamte Rahmen 14 der Rundballenpresse 10 über das Fahrwerk 16 bzw. über die Achse 66 und letztlich die Räder 68 auf dem Untergrund 17 abstützt, trägt das Fahrwerk 16 bzw. die Achse das Gewicht des Gehäuses 12, des Rahmens 14 und des sich in dem Pressraum 23 befindlichen Ballens B. Die Wägeeinrichtung 72 erfasst somit das Gesamtgewicht von Rahmen 14, Gehäuse 12 und Ballen B, so dass die Sensoreinrichtung 70 einen entsprechenden Ausgabewert an die Steuereinheit ECU zur Auswertung und weiteren Verarbeitung übermitteln kann. Darüber hinaus ist eine weitere Sensoreinrichtung 74 vorgesehen, die in bekannter Art und Weise, beispielsweise unter Verwendung eines oder mehrerer Ultraschallsensoren, den Durchmesser des sich in dem Pressraum 23 befindlichen Ballens B ermittelt. Auch der Ausgabewert dieser weiteren Sensoreinrichtung 74 wird an die Steuereinheit ECU zur Auswertung und weiteren Verarbeitung übermittelt.

Es soll nun auch auf ein entsprechendes Verfahren zum Betrieb einer zuvor beschriebenen Rundballenpresse 10 eingegangen werden. An der Steuereinheit ECU der Rundballenpresse 10 können hierzu vorzugsweise vor bzw. zu Beginn der Bildung eines Ballens B Einstellungen, beispielsweise Parameter und oder Funktionen der Rundballenpresse 10 bzw. der Ballenbildung, eingestellt bzw. vorgewählt werden. Dies Einstellungen können beispielsweise durch eine Bedienungsperson direkt an der Steuereinheit ECU vorgenommen werden. Es kann aber auch vorgesehen sein, dass die Einstellungen an der Steuereinheit ECU mittels einer entsprechenden, nicht gezeigten Eingabeeinheit, die beispielsweise an dem Zugfahrzeug vorgesehen sein kann, oder auch per Datenfernübertragung erfolgen.

Gemäß dem vorliegenden Ausführungsbeispiel können insbesondere der Durchmesser sowie das Gewicht eines fertiggestellten Ballens B vorgewählt werden. Während der Bildung des Ballens B wird zur Ermittlung des Gewichts des Ballens B der Ausgabewert der Sensoreinrichtung 70 herangezogen. Der Ausgabewert der Sensoreinrichtung 70 wird an die Steuereinheit ECU übermittelt und von dieser ausgewertet bzw. verarbeitet. Der Ausgabewert kann durch die Sensoreinrichtung 70 und/oder die Steuereinheit ECU um ein Gewicht von Gehäuse 12 und Rahmen 14 korrigiert werden.

Der Ausgabewert bzw. der korrigierte Ausgabewert der Sensoreinrichtung 70 wird durch die Steuereinheit ECU in Bezug zu einem, vorzugsweise zumindest im Wesentlich zeitlich versetzt von der weiteren Sensoreinrichtung 74 erfassten und an die Steuereinheit ECU übermittelten, dem aktuellen Durchmesser des Ballens B entsprechenden Ausgabewert in Bezug gesetzt. Hierfür kann in der Steuereinheit 10 wenigstens ein Referenzdatensatz hinterlegt sein. Vorzugsweise sind aber mehrere Referenzdatensätze hinterlegt bzw. abgespeichert, die entsprechende Werte für unterschiedliches Erntegut und/oder abweichende Erntebedingungen, bei denen es sich beispielsweise um die eine abweichende Erntegutfeuchte, Struktur oder auch Schnittlänge handeln kann, zur Verfügung stellen.

Die Steuereinheit ECU bestimmt basierend auf dem ermittelten Gewicht bzw. Durchmesser und des Referenzdatensatzes, ob das Gewicht und der Durchmesser, des sich in Bildung befindlichen Ballens B zu dem vorgewählten Gewicht und Durchmesser des Ballens B passen oder ob der Ballen B bei dem vorgewählten Durchmesser bzw. im fertigen Zustand ein zu geringes oder ein zu hohes Gewicht aufweisen würde. Entsprechend ermittelt bzw. berechnet die Steuereinheit ECU, ob ein Ballenparameter, bei dem es sich gemäß dem vorliegenden Ausführungsbeispiel um die Ballendichte handelt, bzw. ein Maschinenparamter, hier der auf den Ballen B durch das Pressmittel 30 ausgeübte Pressdruck, zu verändern, insbesondere zu erhöhen bzw. zu reduzieren ist. Entsprechend steuert bzw. regelt die Steuereinheit ECU gemäß dem gezeigten Ausführungsbeispiel das auf den Spannarm 58 des Pressmittels 30 wirkende Spannelement 59, welches hier in der Art eines Hydraulikmotors ausgebildet ist und durch ein nicht näher dargestelltes Hydrauliksystem entsprechend mit Hydraulikdruck beaufschlagt werden kann, um den Spannarm 58 entsprechend den Erfordernissen zu bewegen. Der zuvor beschriebene Ablauf kann während der Bildung eines Ballens einmal, vorzugsweise aber mehrfach erfolgen bzw. in regelmäßigen, insbesondere zeitlichen Abständen wiederholt werden.

## Patentansprüche

1. Rundballenpresse (10) zur Bildung eines zumindest im Wesentlichen zylindrischen Ballens (B), mit einem Rahmen (14), der sich über ein Fahrwerk (16) auf dem Untergrund (17) abstützt und einem Gehäuse (12) mit einem, einen Pressraum (23) mit variablem Durchmesser bestimmenden Pressmittel (30), wenigstens einer ersten Sensoreinrichtung (70) zur Ermittlung des Gewichts des Ballens (B) und einer Steuereinheit (ECU), mittels der zumindest der Durchmessers eines fertiggestellten Ballens (B) vorgegebenen werden kann, und mittels der Steuereinheit (ECU) zusätzlich zu dem Durchmesser das Gewichts eines fertiggestellten Ballens (B) vorgegeben werden kann, und einer weiteren Sensoreinrichtung (74) zur Ermittlung des aktuellen Durchmesser des in dem Pressraum (23) befindlichen Ballens (B), wobei die weitere Sensoreinrichtung (74) konfiguriert ist, den aktuellen Durchmesser des Ballens (B) zu ermitteln und einen den Durchmesser repräsentierenden Ausgabewert an die Steuereinheit (ECU) zu übermitteln, **dadurch gekennzeichnet, dass** die erste Sensoreinrichtung (70) konfiguriert ist, das Gewicht des Gehäuses (12) mit einem in ihr befindlichen Ballen (B) zu ermitteln und einen Ausgabewert an die Steuereinheit (ECU) zu übermitteln, und die Steuereinheit (ECU) konfiguriert ist, zumindest einen Maschinenparameter und/oder einen Ballenparameter in Abhängigkeit von den Ausgabewerten der Sensoreinrichtungen (70, 74) zu steuern bzw. zu regeln.

2. Rundballenpresse nach Anspruch 1, **dadurch gekennzeichnet, dass** es sich bei dem Maschinenparameter um einen von dem Pressmittel (30) auf den zu bildenden Ballen (B) ausgeübten Pressdruck handelt.

3. Rundballenpresse nach einem der vorherigen Ansprüche, **dadurch gekennzeichnet, dass** es sich bei dem Ballenparameter um die Ballendichte handelt.

4. Rundballenpresse nach einem der vorherigen Ansprüche, **dadurch gekennzeichnet, dass** die erste Sensoreinrichtung (70) an dem Fahrwerk (16) vorgesehen ist.

5. Rundballenpresse nach einem der vorherigen Ansprüche, **dadurch gekennzeichnet, dass** die erste Sensoreinrichtung (70) in der Art eines Dehnungsmessstreifens ausgebildet ist und/oder wenigstens einen Dehnungsmessstreifen aufweist.

6. Verfahren zum Betrieb einer Rundballenpresse nach einem der vorherigen Ansprüche, **dadurch gekennzeichnet, dass** mittels einer Steuereinheit (ECU) ein Durchmesser sowie ein Gewicht eines fertiggestellten Ballens (B) vorgewählt und während der Ballenbildung durch Sensoreinrichtungen (70, 74) das aktuelle Gewicht sowie der Durchmesser des Ballens (B) ermittelt werden, wobei die Steuereinheit (ECU) zumindest einen Maschinenparameter und/oder einen Ballenparameter in Abhängigkeit von der Ausgabe der Sensoreinrichtungen (70, 74) steuert bzw. regelt.

7. Verfahren nach Anspruch 6, dass es sich bei dem Maschinen- und/oder Ballenparameter um einen Pressdruck bzw. eine Ballendichte handelt.

8. Verfahren nach Anspruch 6 oder 7, **dadurch gekennzeichnet, dass** in der Steuereinheit (ECU) eine Referenzierung von aktuell ermitteltem Durchmesser und Gewicht des Ballens (B) mit dem vorgewähltem Durchmesser und Gewicht des fertiggestellten Ballens (B) erfolgt, wobei hierfür in der Steuereinheit (ECU) wenigstens ein Referenzdatensatz hinterlegt ist.

## Claims

1. Roundbaler (10) for forming an at least substantially cylindrical bale (B), having a frame (14) which is supported on the ground (17) via a chassis (16), and a housing (12) with a baling means (30) which defines a baling chamber (23) of variable diameter, at least one first sensor device (70) for determining the weight of the bale (B), and a control unit (ECU), by means of which at least the diameter of a finished bale (B) can be predefined, and the weight of a finished bale (B) can be predefined by means of the control unit (ECU) in addition to the diameter, and a further sensor device (74) for determining the current diameter of the bale (B) located in the baling chamber (23), wherein the further sensor device (74) is configured to determine the current diameter of the bale (B) and to transmit an output value representing the diameter to the control unit (ECU), **characterized in that** the first sensor device (70) is configured to determine the weight of the housing (12) with a bale (B) located therein and to transmit an output value to the control unit (ECU), and the control unit (ECU) is configured to control or regulate at least one machine parameter and/or one bale parameter depending on the output values of the sensor devices (70, 74).

2. Roundbaler according to Claim 1, **characterized in that** the machine parameter is a baling pressure exerted by the baling means (30) on the bale (B) to be formed.

3. Roundbaler according to either of the preceding claims, **characterized in that** the bale parameter is the bale density.

4. Roundbaler according to one of the preceding claims, **characterized in that** the first sensor device (70) is provided on the chassis (16).

5. Roundbaler according to one of the preceding claims, **characterized in that** the first sensor device (70) is designed in the manner of a strain gauge and/or has at least one strain gauge.

6. Method for operating a roundbaler according to one of the preceding claims, **characterized in that** a diameter and a weight of a finished bale (B) are preselected by means of a control unit (ECU), and the current weight and the diameter of the bale (B) are determined by sensor devices (70, 74) during bale formation, wherein the control unit (ECU) controls or regulates at least one machine parameter and/or one bale parameter depending on the output of the sensor devices (70, 74).

7. Method according to Claim 6, **characterized in that** the machine parameter and/or bale parameter are a baling pressure and a bale density, respectively.

8. Method according to Claim 6 or 7, **characterized in that** the currently determined diameter and weight of the bale (B) are referenced to the preselected diameter and weight of the finished bale (B) in the control unit (ECU), wherein at least one reference dataset is stored in the control unit (ECU) for this purpose.

## Revendications

1. Presse à balles rondes (10) pour former une balle (B), au moins sensiblement cylindrique, avec un châssis (14), qui prend appui sur le sol (17) par un train de roulement (16), et un boîtier (12) avec un moyen de compression (30) définissant une chambre de compression (23) de diamètre variable, au moins un premier dispositif de détection (70) destiné à déterminer le poids de la balle (B) et une unité de commande (ECU), au moyen de laquelle au moins le diamètre d'une balle complète (B) peut être spécifié et le poids d'une balle (B) finalisée peut être spécifié et au moyen de laquelle unité de commande (ECU) en plus du diamètre, le poids d'une balle (B) finalisée peut être spécifié, et un autre dispositif de détection (74) destiné à déterminer le diamètre actuel de la balle (B) se trouvant dans la chambre de compression (23), l'autre dispositif de détection (74) étant configuré pour déterminer le diamètre actuel de la balle (B) et pour transmettre une valeur de sortie représentant le diamètre à l'unité de commande (ECU), **caractérisée en ce que** le premier dispositif de détection (70) est configuré pour déterminer le poids du boîtier (12) avec une balle (B) s'y trouvant et pour transmettre une valeur de sortie à l'unité de commande (ECU), et l'unité de commande (ECU) est configurée pour commander et/ou réguler au moins un paramètre de machine et/ou un paramètre de balle en fonction des valeurs de sortie des dispositifs de détection (70, 74).

2. Presse à balles rondes selon la revendication 1, **caractérisée en ce que** le paramètre de machine est une pression de compression exercée par les moyens de compression (30) sur la balle (B) à former.

3. Presse à balles rondes selon l'une des revendications précédentes, **caractérisée en ce que** le paramètre de balle est la densité de balle.

4. Presse à balles rondes selon l'une des revendications précédentes, **caractérisée en ce que** le premier dispositif de détection (70) est prévu sur le train de roulement (16).

5. Presse à balles rondes selon l'une des revendications précédentes, **caractérisée en ce que** le premier dispositif de détection (70) est formé à la manière d'une jauge de contrainte et/ou comporte au moins une jauge de contrainte.

6. Procédé destiné à faire fonctionner une presse à balles rondes selon l'une des revendications précédentes, **caractérisé en ce qu'**un diamètre ainsi qu'un poids d'une balle (B) finalisée sont présélectionnés au moyen d'une unité de commande (ECU) et, pendant la formation de la balle, le poids actuel et le diamètre de la balle (B) sont déterminés par des dispositifs de détection (70, 74), l'unité de commande (ECU) commandant et/ou régulant au moins un paramètre de machine et/ou un paramètre de balle en fonction de la sortie des dispositifs de détection (70, 74).

7. Procédé selon la revendication 6, **caractérisé en ce que** le paramètre de machine et/ou de balle est une pression de compression ou une densité de balle.

8. Procédé selon la revendication 6 ou 7, **caractérisé en ce que** se produit dans l'unité de commande (ECU) un référencement d'un diamètre et d'un poids actuellement déterminés de la balle (B) avec le diamètre et le poids présélectionnés de la balle (B) finalisée, au moins un jeu de données de référence étant enregistré dans l'unité de commande (ECU) à cet effet.
